# EUROPEAN PATENT SPECIFICATION

(11) **EP 2 192 005 B1**
(45) Date of publication and mention of the grant of the patent: **22.05.2013**
(21) Application number: 08170245.8
(22) Date of filing: 28.11.2008
(51) Int. Cl.: B60R 13/02

(54) **Trim panel for a bus or coach and bus or coach comprising at least one such panel**
Verkleidungspaneel für einen Bus oder Reisebus, und Bus oder Reisebus mit mindestens einem solchen Verkleidungspaneel
Panneau de garniture pour bus ou autocar, et bus ou autocar comportant au moins un tel panneau

(43) Date of publication of application: 02.06.2010
(73) Proprietor: Iveco France S.A., 69200 Vénissieux (FR)
(72) Inventor: Marquez, Yves, 38370, Saint Clair du Rhone (FR); Bouvier, Guy, 38270, Jarcieu (FR); Salmon, Nicolas, 69200, Venisseux (FR); Meunier, Gabriel, 38890, Salagnon Isere (FR); Zouaoui, Abdelkader, 69800, St Priest (FR); Taiar, Ali, 69700, Givors (FR)
(74) Representative: Borsano, Corrado

(56) References cited:
- WO-A-02/058965
- DE-A1- 3 644 496
- DE-A1-102006 037 854
- US-A1- 2004 239 151
- US-A1- 2006 102 786

## Description

The present invention relates to a trim panel for a bus or coach and to a bus or coach comprising at least one such panel.

In the context of panel production, such as an interior roof for a bus or coach, it is known practice to use a series of elongated bodies alongside one another along the entire length of the roof. By way of example, this length can be 12 metres. Each of these bodies comprises what is known as a flanged edge at each of their two abutment sides. In other words, the panel has a substantially flat bottom and at its abutment sides an edge extending upwards by 15 to 20 mm.

However, there may be lateral play between two adjacent bodies which leads to a poor fit along the entire length of the roof. The overall structure is less rigid as a result and the various bodies of the panel cannot be aligned satisfactorily. This structure is also not very attractive.

From prior art patent document DE 102006037854 A1, a trim panel for a vehicle according to the preamble of claim 1 is known.

It is an object of the present invention to provide a trim panel for a bus or coach that has no movement, particularly perpendicular to the panel, between each of the adjacent bodies of which it is composed, while ensuring satisfactory structural rigidity.

To this end, one object of the invention is a trim panel for a bus or coach as defined in claim 1.

By virtue of the trim panel according to the invention, a bus or coach manufacturer has at his disposal a panel, where the bodies which make up said panel are fitted satisfactorily and are produced by a manufacturing method that is easy to implement.

According to other advantageous features of the trim panel according to the invention, taken individually or in accordance with any technically possible combination:
- each holding element of one elongated body is located between two holding elements of the adjacent elongated body when the two bodies are secured to one another;
- the protruding distance defined by the protruding region is between 10 and 30 mm, preferably between 15 and 20 mm;
- the panel comprises at least four bodies, preferably at least seven bodies, two adjacent bodies being engaged with each other by their respective holding element(s); and
- the holding elements are substantially rectangular and made of metal.

Another subject of the present invention is a bus or coach comprising at least one trim panel as described hereinabove.

According to other advantageous features of the coach or bus according to the invention, taken individually or in accordance with any technically possible combination:
- at least one panel forms an interior roof;
- at least one panel conceals an interior mechanical system; and
- at least one panel forms an exterior panel of the bus or coach.

The invention will be better understood on reading the following description, given purely by way of non-limiting example and referring to the drawings, in which:
- Figure 1 is a view from above of part of a trim panel according to the present invention, as it is being assembled;
- Figure 2 is a side view of the trim panel part shown in Figure 1, along arrow II;
- Figure 3 is a view from above of the trim panel part, immediately before assembly;
- Figure 4 is a view from above of the trim panel part, once assembly is complete; and
- Figure 5 is a side view of the trim panel part shown in Figure 4, along arrow V.

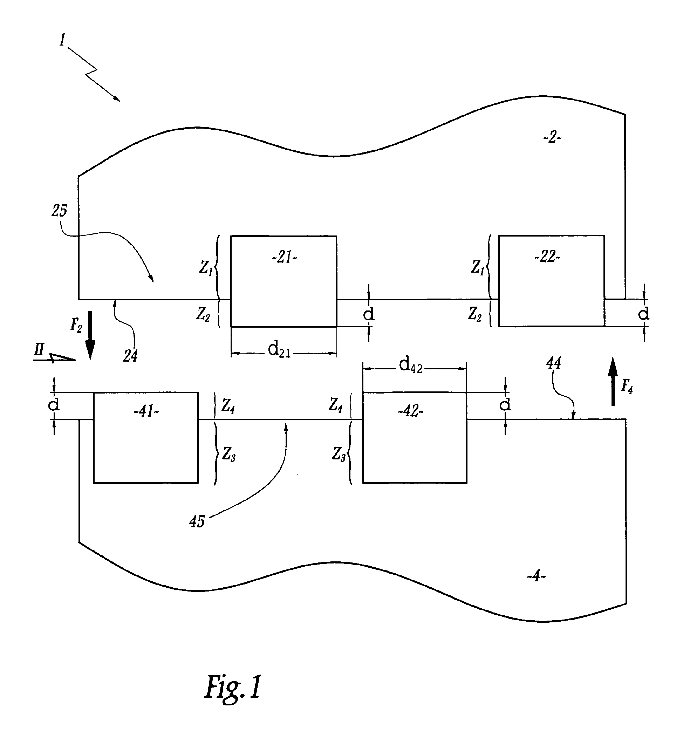

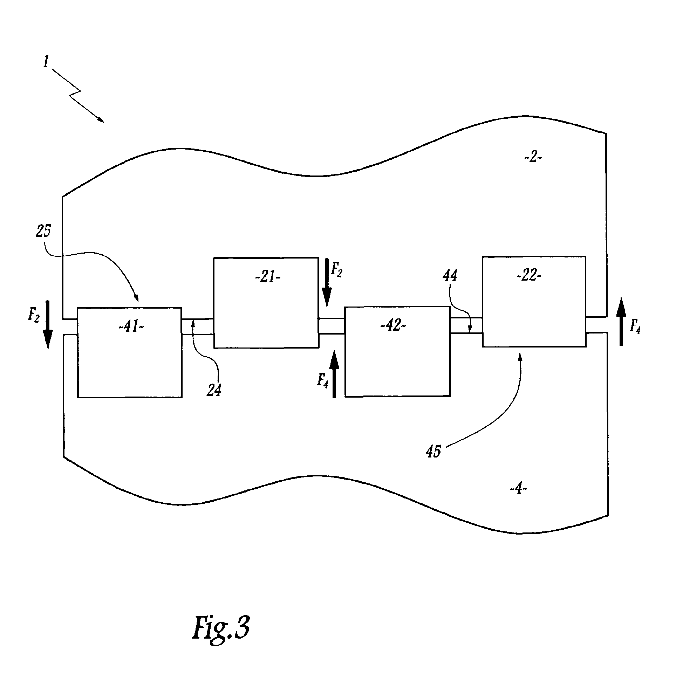

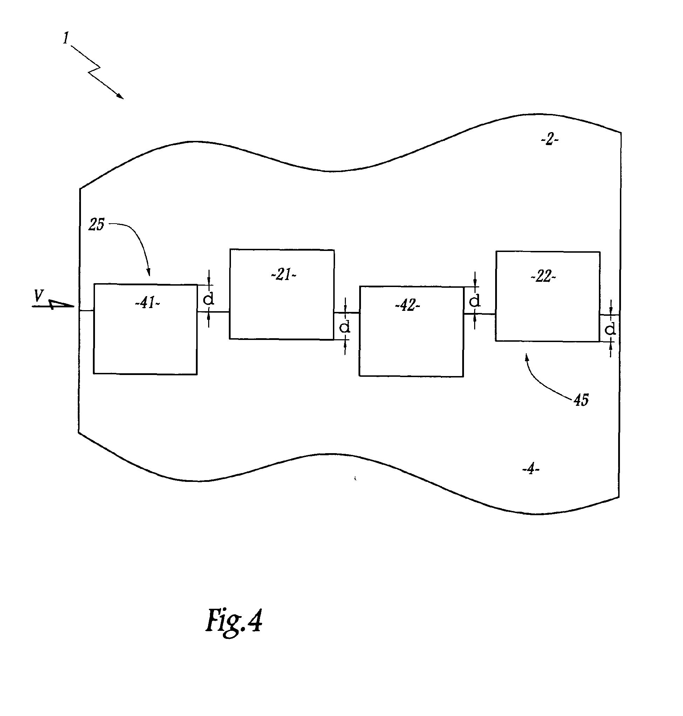

Figures 1 to 5 show the trim panel 1 to be installed, for example, in a bus or coach. The trim panel 1 comprises a first body 2 and a second body 4. These two bodies 2 and 4 are substantially elongated. The trim panel 1 comprises a plurality of such bodies secured together such that the panel is also elongated.

The first body 2 comprises two holding elements 21 and 22 partially located on a abutment edge 24 of the first body 2. A first region z₁, known as a fixing region, of the two elements 21 and 22 is fixed to the body 2, by way of example, by adhesive bonding or welding, while a second region z₂, known as a protruding region, of these bodies extends beyond the abutment edge 24.

In the same way, the body 4 comprises two holding elements 41 and 42 partially located on a abutment edge 44. A region z₃, known as a fixing region, of the two holding elements 41 and 42 is adhesively bonded or welded to the body 4, with a region z₄, known as a protruding region, forming a projection extending beyond the abutment edge 44.

The holding elements 21, 22, 41 and 42 are substantially rectangular pieces made of metal. It should be noted that holding elements having other shapes and made of other types of material can also be provided.

The two bodies 2 and 4 can be made, by way of example, of thermoplastics when trim panels for the interior of the bus or coach are being produced. In this case, the trim panel can, to take a non-limiting example, serve as a roof. This type of trim can, for example, be joined laterally by screws to a rail on the carcass of the vehicle. Each of the two side edges of the body is thus screwed to each of the rails.

The panel can also cover a mechanism for opening and closing the doors. This door trim can be fixed to the carcass of the vehicle by way of snap fasteners on the lower part and by way of screws on the upper part. In addition, the panel can be used to cover up an air-conditioning unit. The trim can thus be inserted into a jaw and be fixed to an aluminium sheet by screws.

The trim panel 1 can also be mounted outside the bus or coach on a side wall. It can then be produced, for example, from sheet metal or aluminium.

It can be seen that the bodies are substantially planar. They are thus easier to manufacture, for example by moulding, since it is no longer necessary to produce in particular what are known as flanged edges. Moreover, the lack of such edges produces a saving in mass.

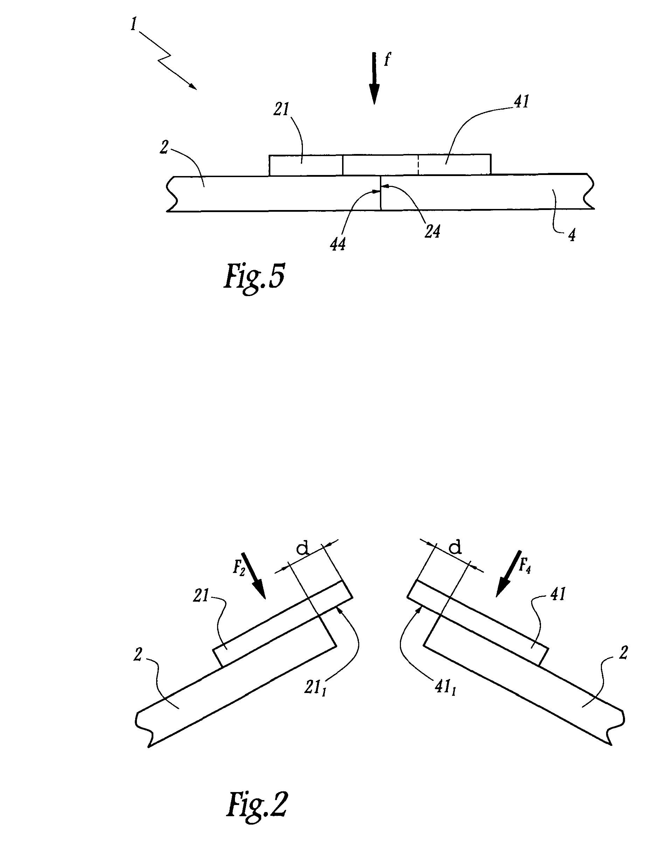

When the two bodies 2 and 4 are to be joined together, they are first positioned facing one another such that their respective abutment edges 22 and 44 are face to face as shown in Figures 1 and 2. It can be seen that the holding elements 21, 22, 41 and 42 have a guide function such that the two bodies 2 and 4 can be joined together more easily. This is because the two elements 21 and 22 have been fixed to the body 2 leaving a gap substantially greater than the size d₄₂ of the front of the holding element 42. Thus the element 42 can be introduced and guided between the elements 21 and 22.

In the same way, the element 21 can be located between the elements 41 and 42. This is because the gap between these two elements serves as a guide for the element 21 since the size d₂₁ of the front of the latter is smaller than the distance separating the elements 41 and 42 at the front.

Meanwhile, the protruding distance d defined by the protruding regions z₂ and z₄ is between 10 and 30 mm, preferably between 15 and 20 mm.

In other words, the elements 21 and 22 are in a staggered arrangement with respect to the elements 41 and 42, respectively. The two bodies 2 and 4 can thus be fitted together precisely.

As shown in Figure 2, it can be seen that it is advantageous to incline the bodies 2 and 4 so that they can be joined together more easily. This is because the overall longitudinal dimensions are less than when two bodies 2 and 4 are fixed together starting from the flat position.

The body 2 is moved in the direction of the arrows F₂ while the body 4 is moved in the direction of the arrows F₄. Thus, as shown in Figure 5, the body 2 is in contact with the body 4 at their respective abutment edges 24 and 44.

A surface 21₁ of the part of the element 21 extending beyond the body 2, this surface being known as the lower surface with respect to the mounted position, if the panel is assumed to correspond to the ceiling, comes into contact with an upper surface 45 of the body 4. In the same way, a lower surface 41₁ of the part of the element 42 extending beyond the body 4 is flush with an upper surface 25 of the body 2. The body 2 thus bears against the body 4 by way of the holding elements 21 and 22 while the body 4 bears against the body 2 by way of the holding elements 41 and 42. In other words, the protruding regions z₂ and z₄ oppose a force f shown in Figure 5. This force f corresponds to the force of gravity when the two bodies 2 and 4 are parallel to the ground.

Thus the bodies 2 and 4 hold each other in a stable manner. There is no misalignment, in an axis perpendicular to the plane of the panel 1, of the bodies 2 and 4 in the region of contact between their respective abutment edges 24 and 44. Generally, the rigidity of the trim panel 1 is satisfactory.

It should be noted that the greater the number of holding elements on either side of the body 2 and 4, the greater the rigidity of the trim panel 1.

It is a possibility to position two consecutive holding elements in turn on each of the two bodies. Once the two bodies are secured to one another, two consecutive elements of the first body are thus located between two elements of the adjacent second body.

In the same way, a number of elements which are not necessarily identical can be provided between each of the two bodies.

It can also be seen that the number of bodies can be matched to the desired size of the trim panel, and that the lateral dimension of the bodies can also vary.

In all these configurations, the alignment of this panel is thus ensured.

This invention can advantageously be applied to trim panels longer than 7 metres. In this case, the number of bodies is at least four, and preferably seven.

## Claims

1. Trim panel (1) for a bus or coach, comprising:
- at least one first elongated body (2, 4) having a first and a second abutment edge (24, 44) opposite one another, and
- at least one second elongated body (2, 4) adjacent to the first body and having a third and a fourth abutment edge (24, 44) opposite one another, the third edge being adapted for being located next to the second edge, each of the elongated bodies (2, 4) comprises at least one holding element (21, 22, 41, 42) having a fixing region (z₁, z₃) secured to the body and a region (z₂, z₄) protruding beyond the abutment edge (24, 44) towards the adjacent body, each of the holding elements being adapted for holding the two edges substantially next to one another; **characterized in that** the fixing region (z₁, z₃) of each holding element (21, 22, 41, 42) is adhesively bonded or welded to the body, wherein the fixing region (z₁, z₃) does not protrude beyong the abutment edge (24, 44) towards the adjacent body.

2. Trim panel according to claim 1, **characterized in that** each holding element (21, 22, 41, 42) of one elongated body (2, 4) is located between two holding elements of the adjacent elongated body when the two bodies are secured to one another.

3. Bus or coach comprising at least one trim panel (1) according to any one of the preceding claims.

4. Bus or coach according to Claim 3, **characterized in that** at least one panel forms an interior roof.

5. Bus or coach according to Claim 3 or 4, **characterized in that** at least one panel conceals an interior mechanical system.

6. Bus or coach according to Claim 3, 4 or 5, **characterized in that** at least one panel forms an exterior panel of the bus or coach.

## Patentansprüche

1. Verkleidungspaneel (1) für einen Bus oder Reisebus, aufweisend:
- mindestens einen ersten länglichen Körper (2, 4) mit einem ersten und einem zweiten Anschlagrand (24, 44), die sich gegenüberliegen, und
- mindestens einen zweiten länglichen Körper (2, 4), der benachbart zu dem ersten Körper ist, und mit einem dritten und einem vierten Anschlagrand (24, 44), die sich gegenüberliegen, wobei der dritte Rand ausgelegt ist, um neben dem zweiten Rand angeordnet zu werden, wobei jeder der länglichen Körper (2, 4) mindestens ein Halteelement (21, 22, 41, 42) aufweist, mit einem am Körper befestigten Fixierbereich (z₁, z₃) und einem Bereich (z₂, z₄), der über den Anschlagrand (24, 44) in Richtung des benachbarten Körpers hinausragt, wobei jeder der Halteelemente ausgelegt ist, um die zwei Ränder im Wesentlichen nebeneinander zu halten, **dadurch gekennzeichnet, dass**
der Fixierbereich (z₁, z₃) von jedem Halteelement (21, 22, 41, 42) an den Körper anhaftend geklebt oder geschweißt ist, wobei der Fixierbereich (z₁, z₃) nicht über den Anschlagrand (24, 44) in Richtung des benachbarten Körpers hinausragt.

2. Verkleidungspaneel nach Anspruch 1, **dadurch gekennzeichnet, dass** jedes Halteelement (21, 22, 41, 42) von einem länglichen Körper (2, 4) zwischen zwei Halteelementen von dem benachbarten länglichen Körper angeordnet ist, wenn die zwei Körper aneinander befestigt sind.

3. Bus oder Reisebus aufweisend mindestens ein Verkleidungspaneel (1) nach einem der vorhergehenden Ansprüche.

4. Bus oder Reisebus nach Anspruch 3, **dadurch gekennzeichnet, dass** mindestens ein Paneel ein Innendach formt.

5. Bus oder Reisebus nach Anspruch 3 oder 4, **dadurch gekennzeichnet, dass** mindestens ein Paneel ein inneres mechanisches System verdeckt.

6. Bus oder Reisebus nach Anspruch 3, 4 oder 5, **dadurch gekennzeichnet, dass** mindestens ein Paneel ein äußeres Paneel von dem Bus oder Reisebus formt.

## Revendications

1. Panneau de garniture (1) pour bus ou autocar, comprenant :
- au moins un premier corps allongé (2, 4) comportant un premier bord de butée (24) et un deuxième bord de butée (44) opposés l'un à l'autre, et
- au moins un deuxième corps allongé (2, 4) adjacent au premier corps et comportant un troisième bord de butée (24) et un quatrième bord de butée (44) opposés l'un à l'autre, le troisième bord étant apte à être situé à côté du deuxième bord, chacun des corps allongés (2, 4) comprend au moins un élément de maintien (21, 22, 41, 42) comportant une région de fixation (z₁, z₃) attachée au corps et une région (z₂, z₄) faisant saillie au-delà du bord de butée (24, 44) vers le corps adjacent, chacun des éléments de maintien étant apte à maintenir les deux bords sensiblement l'un à côté de l'autre ; **caractérisé en ce que** la région de fixation (z₁, z₃) de chaque élément de maintien (21, 22, 41, 42) est liée de manière adhésive ou soudée au corps, dans lequel la région de fixation (z₁, z₃) ne fait pas saillie au-delà du bord de butée (24, 44) vers le corps adjacent.

2. Panneau de garniture selon la revendication 1, **caractérisé en ce que** chaque élément de maintien (21, 22, 41, 42) d'un corps allongé (2, 4) est situé entre deux éléments de maintien du corps allongé adjacent lorsque les deux corps sont attachés l'un à l'autre.

3. Bus ou autocar comprenant au moins un panneau de garniture (1) selon l'une quelconque des revendications précédentes.

4. Bus ou autocar selon la revendication 3, **caractérisé en ce qu'**au moins un panneau forme un toit intérieur.

5. Bus ou autocar selon la revendication 3 ou 4, **caractérisé en ce qu'**au moins un panneau cache un système mécanique intérieur.

6. Bus ou autocar selon la revendication 3, 4 ou 5, **caractérisé en ce qu'**au moins un panneau forme un panneau extérieur du bus ou de l'autocar.
